# EUROPEAN PATENT APPLICATION

(11) **EP 2 982 913 A2**
(43) Date of publication of application: **10.02.2016**
(21) Application number: 14177395.2
(22) Date of filing: 17.07.2014
(51) Int. Cl.: F24F 13/28, F24F 3/16, B01D 46/10

(54) **Air purification device**

(30) Priority: 22.05.2014 CN 201410218183
(71) Applicant: Firmstars Household Appliances Shenzhen Co., Ltd., Shenzhen Guangdong 519107 (CN)
(72) Inventor: Qin, Feng, 519107 Shenzhen (CN)
(74) Representative: Hryszkiewicz, Danuta

(57) **Abstract**

An air purification device, including: a main body, a frame, a wind wheel holder, and wind wheels. The frame is disposed outside the main body. Air outlet grids are disposed on two sides of the frame. The main body is connected to the wind wheel holder. Wind wheel mounting slots are disposed on the wind wheel holder, and the wind wheels are mounted in the wind wheel mounting slots or in the wind wheel holder. The wind channels disposed on the wind wheel holder correspond to the wind wheels. A plurality of air inlets is disposed on the main body. A plurality of air outlets is disposed on the frame.

## Description

The invention relates to an air purification device.

Air purifier, or air cleaner, is a product that is able to absorb, decompose, or transform various air pollutants (including PM 2.5, dust, pollens, decoration pollutants, bacteria, and allergens) to effectively improve the cleanliness of the air.

However, a typical air purification device includes one wind wheel, and has big noise, small area of air inlet and air outlet, non-uniform air pressure, low filter utilization, low energy efficiency, and heavyweight.

### SUMMARY OF THE INVENTION

In view of the above-described problems, it is one objective of the invention to provide an air purification device that has good performance, small noise, large area of air inlets and air outlets, uniform air pressure, high filter utilization, high energy efficiency, and light weight.

To achieve the above objective, in accordance with one embodiment of the invention, there is provided a first air purification device, comprising: a main body, the main body comprising a plurality of air inlets; a frame, the frame comprising air outlet grids and a plurality of air outlets; a wind wheel holder, the wind wheel holder comprising a plurality of wind wheel mounting slots and a plurality of wind channels; and wind wheels. The frame is disposed outside the main body. The air outlet grids are disposed on two sides of the frame. The main body is connected to the wind wheel holder. The wind wheel mounting slots are disposed on the wind wheel holder, and the wind wheels are mounted in the wind wheel mounting slots or in the wind wheel holder. The wind channels disposed on the wind wheel holder are corresponding to the wind wheels.

In a class of this embodiment, a front cover and a rear cover are disposed on a front end and a rear end of the frame, respectively; and an air inlet grid is disposed on the rear cover.

In a class of this embodiment, each wind wheel mounting slot comprises a wind wheel bottom plate; and the wind wheel bottom plate and the wind wheel are fixed on together.

In a class of this embodiment, the wind wheel bottom plate is provided with a damping sleeve.

In a class of this embodiment, a filter is disposed between the main body and the air outlet grid.

In a class of this embodiment, a display window is disposed on a top of the frame.

In a class of this embodiment, more than two wind wheels are provided.

In accordance with another embodiment of the invention, there is provided a second air purification device comprising: a main body, the main body comprising a plurality of air inlets; a frame, the frame comprising air outlet grids and a plurality of air outlets; a plurality of wind wheel holders; and wind wheels. The frame is disposed outside the main body. The air outlet grids are disposed on two sides of the frame. The wind wheel holders are disposed on the main body; and the main body is connected to the wind wheel holder. The wind wheels are disposed in the wind wheel holders, respectively.

In accordance with still another embodiment of the invention, there is provided a third air purification device comprising: a main body, the main body comprising a plurality of air inlets; a frame, the frame comprising air outlet grids and a plurality of air outlets; a wind wheel holder; and a plurality of wind wheels. The frame is disposed outside the main body. The air outlet grids are disposed on two sides of the frame. The wind wheels are disposed on the main body. The wind wheels are connected to both the wind wheel holder and the main body.

In a class of this embodiment, more than two wind wheels are provided.

Advantages according to embodiments of the invention are summarized as follows:

A plurality of wind wheels is employed, so that the noise and air pressure resulting from a single motor are weakened. The motor and the motive force are decentralized. Furthermore, as the area of the air inlets and air outlets of the multi-combined wind wheels is increased, the energy efficiency is improved, the noise is decreased, the air pressure becomes uniform, the utilization of the filter device is increased, and the product is light-weighted.

### BRIEF DESCRIPTION OF THE DRAWINGS

The invention is described hereinbelow with reference to the accompanying drawings, in which:
FIG. 1 is an exploded view of an air purification device in accordance with one embodiment of the invention;
FIG. 2 is a structure diagram of an air purification device in a service state in accordance with one embodiment of the invention;
FIG. 3 is an appearance view of an air purification device in accordance with one embodiment of the invention; and
FIG. 4 is an exploded view of an air purification device in accordance with another embodiment of the invention.

### DETAILED DESCRIPTION OF THE EMBODIMENTS

For further illustrating the invention, experiments detailing an air purification device are described below. It should be noted that the following examples are intended to describe and not to limit the invention.

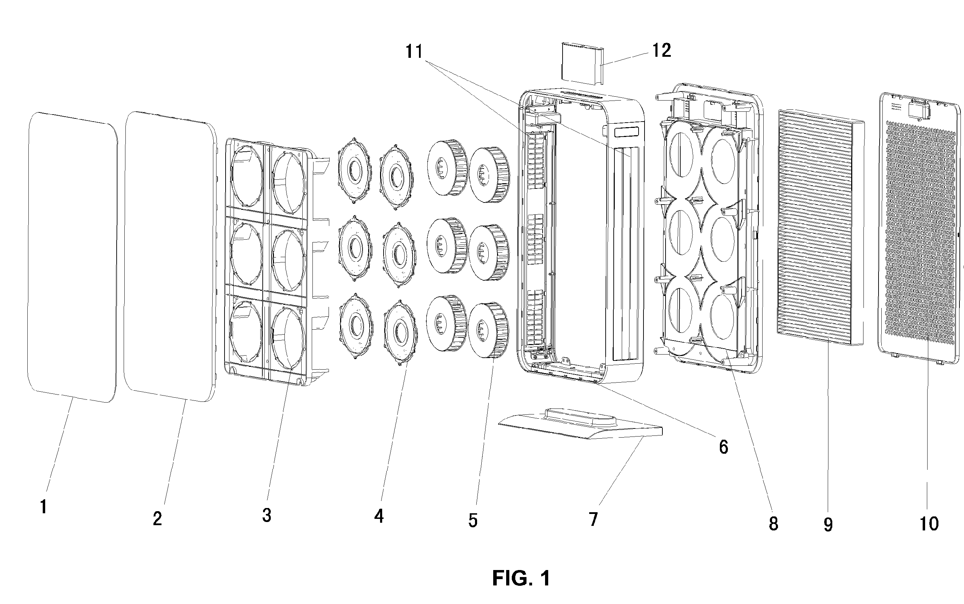

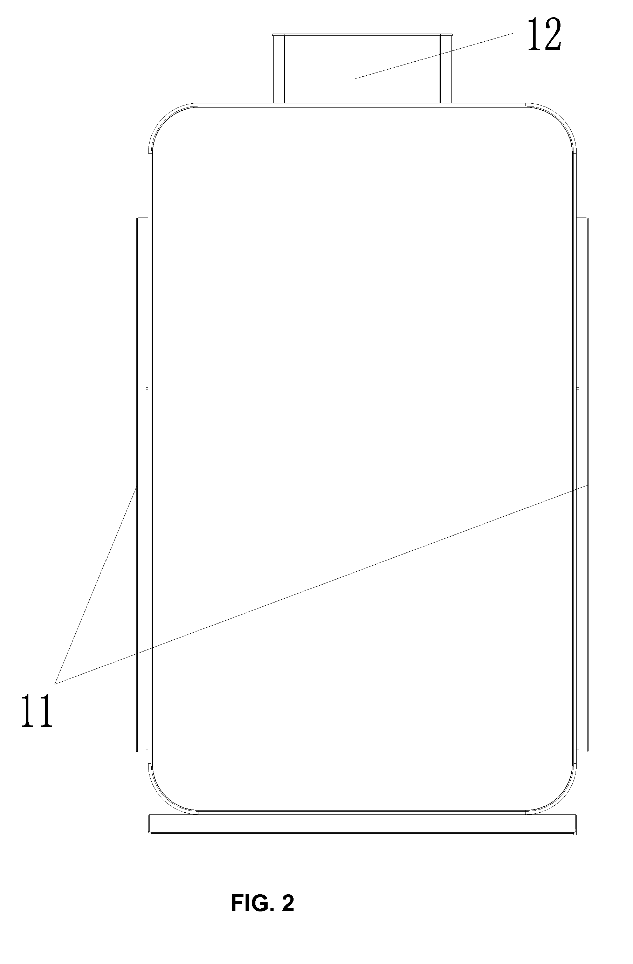

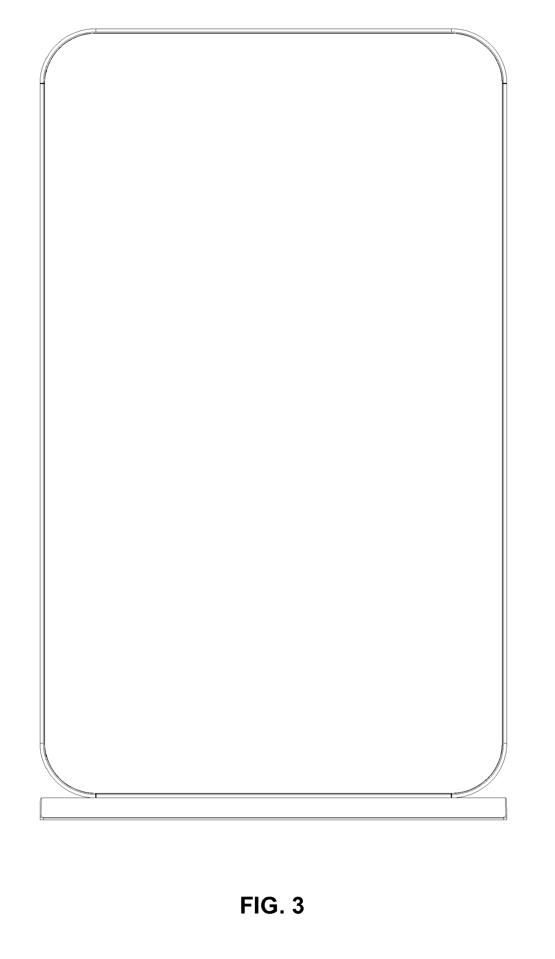

As shown in FIGS. 1-3, an air purification device is provided for the purpose of solving the problems of large noise, low energy efficiency, uneven air inlet and air outlet that result from the use of one wind wheel in the existing air purification device.

The air purification device comprises: a decorative plate 1, a main body 8 and a frame disposed outside the main body 8. Air outlet grids 11 are disposed on two sides of the frame 6. The main body 8 is connected to a wind wheel holder 3. The wind wheel holder 3 comprises a plurality of wind wheel mounting slots. Wind wheels 5 are mounted in the wind wheel mounting slots. A front cover 2 and a rear cover 1 are disposed on a front end and a rear end of the frame 6, respectively. An air inlet grid 10 is disposed on the rear cover 1. The main body 8 is provided with a plurality of air inlets. The frame 6 is provided with a plurality of air outlets. A base 7 is disposed at the bottom of the air purification device.

In another embodiment of the invention, the wind wheels 5 are directly assembled on the wind wheel holder 3.

The wind wheel holder 3 is further provided with a plurality of air channels corresponding to the wind wheels. The main body 8 is provided with a plurality of air outlets and air inlets.

The air purification device can also be achieved by using another technical solution. The first air purification device comprises: a main body 8 and a frame 6 disposed outside the main body 8. Air outlet grids 11 are disposed on two sides of the frame 6. A wind wheel bottom plate 4 and a wind wheel 5 are assembled on the main body 8; the wind wheel holder 3 is also assembled on the main body 8; and the wind wheel bottom plate 4 is provided with a damping sleeve. Or, the wind wheel 5 is directly assembled on the main body 8, no need of the wind wheel bottom plate 4.

A front cover 2 and a rear cover 1 are disposed on a front end and a rear end of the frame 6, respectively. The rear end is provided with the air outlet grid 10.

In one embodiment of the invention, the wind wheel mounting slot is provided with the wind wheel bottom plate 4 that has a size matching with the size of the wind wheel. The wind wheel bottom plate 4 and the wind wheel 5 are fixed together. Six wind wheels are provided, that is, the six wind wheels 5 are arranged in three rows with two in each row.

To achieve the filtration effect, a filter 9 is disposed between the main body 8 and the air outlet grid 11.

Preferably, the air outlet grids 11 are disposed on the two sides of the frame. A display window 12 is disposed on a top of the frame. When the air purification device works, the display window 12 extends outward. When the air purification device does not work, the display window 12 is closed.

In the above technical solution, the wind wheels are mounted in the wind wheel mounting slots, so that the noise and air pressure resulting from a single motor is weakened. The motor and the motive force are decentralized. As the area of the air inlets and air outlets of the multi-combined wind wheels is increased, the energy efficiency is improved, the air pressure becomes uniform, and the utilization of the filter device is increased.

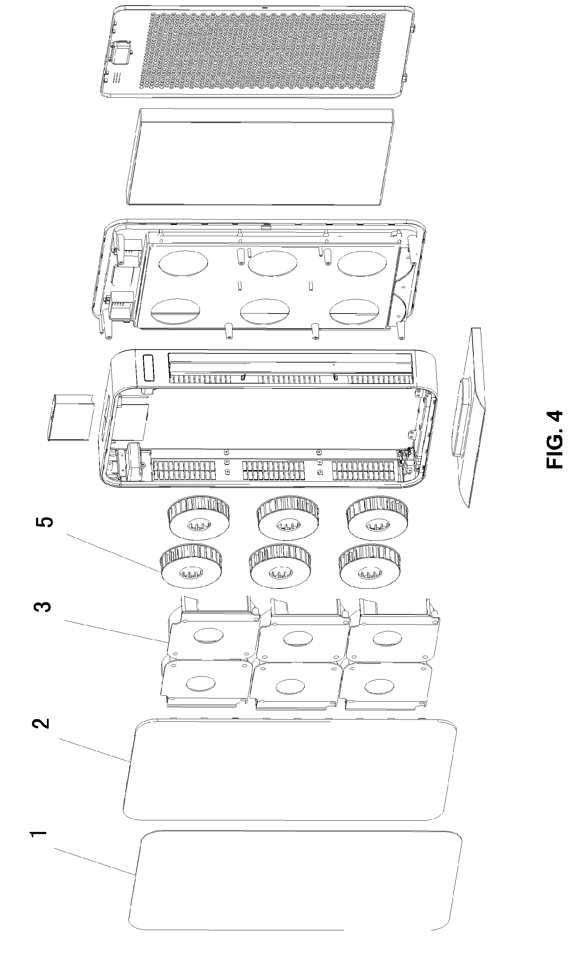

An air purification device, as shown in FIG. 4, the wind wheel bottom plate 4 in FIG. 1 is absent. The air purification device comprises: a main body and a frame disposed outside the main body. Air outlet grids are disposed on two sides of the frame. The main body is provided with a plurality of wind wheel holders 3, and the main body is connected to the wind wheel holders 3. Wind wheels 5 are disposed on the wind wheel holders 3, respectively. The main body is provided with a plurality of air inlets. The frame is provided with a plurality of air outlets.

In the above technical solution, the wind wheel holders are mounted on the main body, so that the noise and air pressure resulting from a single motor is weakened. The motor and the motive force are decentralized. Besides, as the area of the air inlets and air outlets of the multi-combined wind wheels is increased, the energy efficiency is improved, the noise is decreased, the air pressure becomes uniform, the utilization of the filter device is increased, and the product is light-weighted.

Changes can be made on the above technical solution:

An air purification device comprises: a main body and a frame disposed outside the main body. Air outlet grids are disposed on two sides of the frame. The main body is provided with a plurality of wind wheels, and the wind wheels are connected to both a wind wheel holder and the main body. The main body is provided with a plurality of air inlets. The frame is provided with a plurality of air outlets.

In the above technical solution, a plurality of wind wheels is mounted on the main body, so that the noise and air pressure resulting from a single motor is weakened. The motor and the motive force are decentralized. As the area of the air inlets and air outlets of the multi-combined wind wheels is increased, the energy efficiency is improved, the noise is decreased, the air pressure becomes uniform, the utilization of the filter device is increased, and the product is light-weighted.

While particular embodiments of the invention have been shown and described, it will be obvious to those skilled in the art that changes and modifications may be made without departing from the invention in its broader aspects, and therefore, the aim in the appended claims is to cover all such changes and modifications as fall within the true spirit and scope of the invention.

## Claims

1. An air purification device, comprising:
a) a main body (8), the main body (8) comprising a plurality of air inlets;
b) a frame (6), the frame (6) comprising air outlet grids (11) and a plurality of air outlets;
c) a wind wheel holder (3), the wind wheel holder (3) comprising a plurality of wind wheel mounting slots and a plurality of wind channels; and
d) wind wheels (5);
**characterized in that**
the frame (6) is disposed outside the main body (8);
the air outlet grids (11) are disposed on two sides of the frame (6); the main body (8) is connected to the wind wheel holder (3);
the wind wheel mounting slots are disposed on the wind wheel holder (3), and the wind wheels (5) are mounted in the wind wheel mounting slots or in the wind wheel holder (3); and
the wind channels disposed on the wind wheel holder are corresponding to the wind wheels.

2. The device of claim 1, **characterized in that** a front cover (2) and a rear cover (1) are disposed on a front end and a rear end of the frame (6), respectively; and an air inlet grid (10) is disposed on the rear cover (1).

3. The device of claim 1, **characterized in that** each wind wheel mounting slot comprises a wind wheel bottom plate (4); and the wind wheel bottom plate (4) and the wind wheel (5) are fixed on together.

4. The device of claim 3, **characterized in that** the wind wheel bottom plate (4) is provided with a damping sleeve.

5. The device of claim 1 or 2, **characterized in that** a filter (9) is disposed between the main body (8) and the air outlet grid (11).

6. The device of claim 1 or 2, **characterized in that** a display window (12) is disposed on a top of the frame.

7. The device of claim 1 or 2, **characterized in that** more than two wind wheels are provided.

8. An air purification device, comprising:
a) a main body (8), the main body (8) comprising a plurality of air inlets;
b) a frame (6), the frame (6) comprising air outlet grids (11) and a plurality of air outlets;
c) a plurality of wind wheel holders (3); and
d) wind wheels (5);
**characterized in that**
the frame (6) is disposed outside the main body (8);
the air outlet grids (11) are disposed on two sides of the frame (6); the wind wheel holders (3) are disposed on the main body (8);
the main body (8) is connected to the wind wheel holder (3); and the wind wheels (5) are disposed in the wind wheel holders (3).

9. An air purification device, comprising:
a) a main body (8), the main body (8) comprising a plurality of air inlets;
b) a frame (6), the frame (6) comprising air outlet grids (11) and a plurality of air outlets;
c) a wind wheel holder (3); and
d) a plurality of wind wheels (5);
**characterized in that**
the frame (6) is disposed outside the main body (8);
the air outlet grids (11) are disposed on two sides of the frame (6); the wind wheels (5) are disposed on the main body (8);
the wind wheels (5) are connected to both the wind wheel holder (3) and the main body (8).

10. The device of claim 9, **characterized in that** more than two wind wheels are provided.
